# EUROPEAN PATENT SPECIFICATION

(11) **EP 3 023 384 B1**
(45) Date of publication and mention of the grant of the patent: **31.05.2017**
(21) Application number: 15195112.6
(22) Date of filing: 18.11.2015
(51) Int. Cl.: B68G 1/00, A47G 9/10, C08G 18/48, C08G 18/76, C08G 18/79, C08G 101/00

(54) **WASHABLE PILLOW**
WASCHBARES KISSEN
OREILLER LAVABLE

(30) Priority: 18.11.2014 US 201414546277
(43) Date of publication of application: 25.05.2016
(73) Proprietor: Dan-Foam ApS, 5560 Aarup (DK)
(72) Inventor: HEIDTMANN, Christina B.V., 5000 Odense C (DK); WENDSJO PEDERSEN, Asa Anna Maria, 5250 Odense SV (DK)
(74) Representative: Hoefer & Partner Patentanwälte mbB

(56) References cited:
- WO-A2-03/099079
- US-A1- 2007 044 239
- US-A1- 2013 150 476
- US-A1- 2013 263 386

## Description

### FIELD OF THE INVENTION

The present application generally relates to pillows and cushions, and more particularly to a washable pillow or cushion containing viscoelastic foam.

### BACKGROUND OF THE INVENTION

The neck of a person lying in a supine or side-lying position is often out of alignment with the person's spine. That is commonly the case when the person's neck is supported by a pillow or multiple pillows such that the neck lies at an angle defined by the deflected height of the pillow(s), wherein the angle is typically not co-planar with the spine. The deflected height of the pillow is closely related to the stiffness imparted by its constituent materials. Pillows containing viscoelastic foam may be used to encourage proper neck alignment.

Although pillows constructed at least in part with viscoelastic foam have many desirable properties, many viscoelastic foams have properties that can generate design challenges. For example, some viscoelastic foams have less durability and/or are weaker (e.g., tear strength, tensile strength, and the like) than other types of foam. As another example, some viscoelastic foams retain large quantities of water, and can be difficult to dry. In light of these properties, improvements regarding the use of viscoelastic foam in pillows and cushions continue to be welcome additions to the art.

### SUMMARY OF THE INVENTION

Some embodiments of the present invention provide a pillow containing multiple viscoelastic foam components that are able to withstand repeated washing and drying with conventional detergents and laundry machines without damage or loss of mechanical properties.

The present invention provides, in one aspect, a washable pillow comprising a sleeve defining a cavity and a filler material positioned within the cavity. The sleeve and/or filler material includes a viscoelastic foam having a hydrophobicity expressed in terms of water uptake between about 0% (w/w) and about 5% (w/w), an average cell size between about 0.16 mm and about 0.19 mm, and an air permeability between about 1.0 liters per second and about 5.0 liters per second.

The present invention provides, in another aspect, a washable pillow comprising a sleeve that includes a first panel and a second panel connected to the first panel along the edges of the panels to form a cavity between the panels, and a filler material positioned within the cavity. The sleeve and/or filler material includes a viscoelastic foam that in some cases has a hydrophobicity expressed in terms of water uptake between about 0% (w/w) and about 5% (w/w). Stitching extends through each of the first and second panels to define a quilting pattern between the edges of the connected panels. In addition, each of the first and second panels can include a viscoelastic foam layer, a first fabric layer (e.g., of netting material, in some embodiments) adjacent an interior surface of the viscoelastic foam layer, and a second fabric layer adjacent an exterior surface of the viscoelastic foam layer.

Other features and aspects of the invention will become apparent by consideration of the following detailed description and accompanying drawings.

### BRIEF DESCRIPTION OF THE DRAWINGS

FIG. 1 is an exploded perspective view of a pillow representing an exemplary embodiment of the invention.
FIG. 2 is an assembled, partial cross-sectional view of the pillow of FIG. 1 through section 2-2 in FIG. 4.
FIG. 3 is an exploded perspective view of a portion of the pillow of FIG. 1.
FIG. 4 is an assembled plan view of the pillow of FIG. 1.

Before any embodiments of the invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

The disclosed pillow includes viscoelastic foam, sometimes referred to as "memory foam" or "low resilience foam." Viscoelastic foam can have varying degrees of density, pressure responsiveness, porosity, thermal conductivity, thermal diffusity, etc. However, viscoelastic foam is typically characterized by slow recovery and low resilience. The use of viscoelastic foam permits the pillow to conform to the shape of the portion of a person's body that contacts the pillow. While conventional materials typically exhibit constant stiffness or hardness in response to changing temperatures, the stiffness or hardness of viscoelastic foam is often temperature dependent, and in many cases is temperature dependent based upon body heat of a user (having a lower stiffness or hardness at an elevated temperature as compared to its stiffness at a cooler temperature). The body heat of a user acts to soften the portion of the pillow in contact with the body, while the portion of the pillow not contacting the body remains more firm. As a result, the disclosed pillow allows for greater comfort over conventional pillows by accommodating each user's body form.

In general, viscoelastic foam materials cannot be nondestructively washed and dried. For example, most viscoelastic polyurethane foams are substantially hydrophilic, and as a result tend to absorb and retain liquid and exhibit swelling when washed or otherwise exposed to water. Hydrophilicity and limited air permeability in typical viscoelastic foams makes complete drying difficult. In addition, the tensile strength of such foams often decreases when wet, leading to fragility and frequent distortion, cracking, breaking, or fragmentation of the foam structure and loss of viscoelastic properties upon exposure to the mechanical stresses associated with typical washing and drying procedures. As a result, washing is generally not recommended for conventional viscoelastic foam pillows.

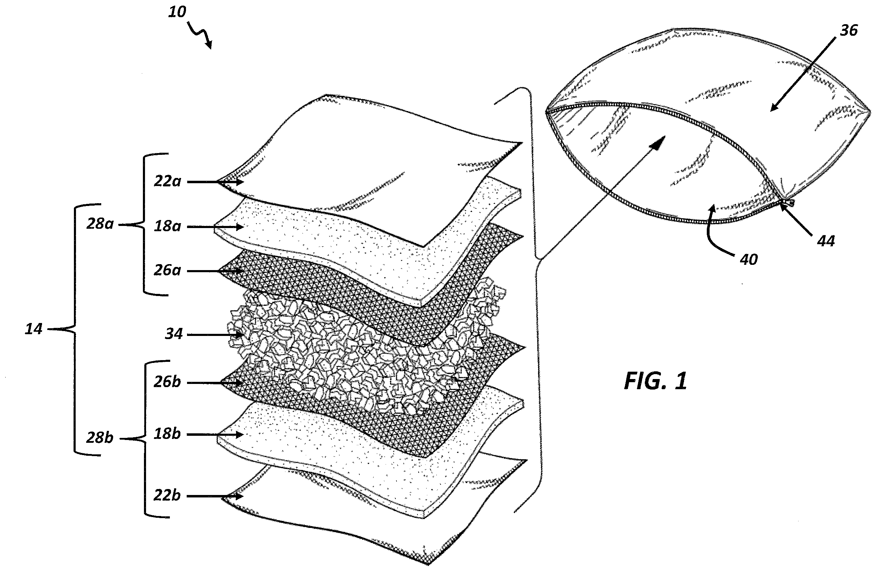

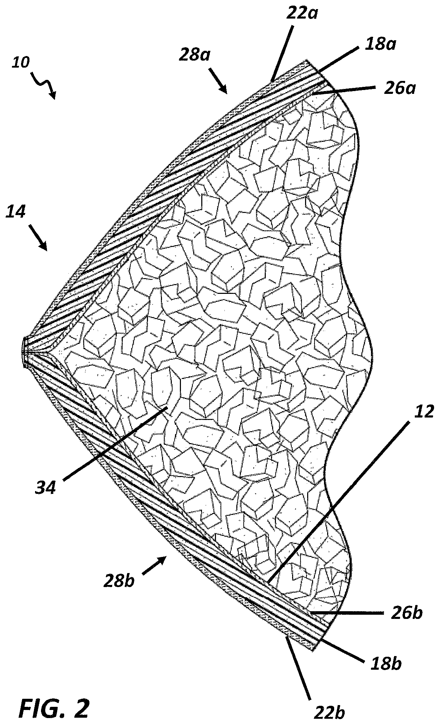

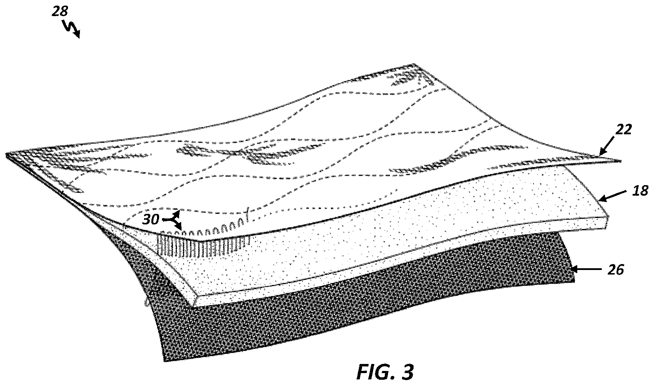

FIGS. 1 and 2 illustrate a washable pillow 10 having a quilted, multi-layered sleeve 14 and viscoelastic foam filler material 34 within a cavity 12 of the sleeve 14. With reference to FIGS. 2 and 3, the sleeve 14 includes opposed layers of viscoelastic foam 18. In some embodiments, the viscoelastic foam layers 18 of the sleeve 14 have a density of about 65 kg/m³. However, a suitable density for the viscoelastic foam layers 18 for an average weight pillow (for example) can be between about 30 and about 140 kg/m³, and in some embodiments between about 40 and about 100 kg/m³, and in other embodiments between about 45 and about 80 kg/m³, and especially between about 50 and about 70 kg/m³. Further, a suitable density for the viscoelastic foam layers 18 for a lightweight pillow (again, by way of example) can be less than about 50 kg/m³. Likewise, a suitable density for the viscoelastic foam layers 18 for a heavyweight pillow, for example, can be greater than about 110 kg/m³. Alternatively, the viscoelastic foam layers 18 can have any density in accordance with the desired characteristics of the pillow 10.

The hardness of the viscoelastic foam layers 18 used in the sleeve 14 and of the viscoelastic foam used in the filler material 34 may be between about 30 N and about 70 N, and in some embodiments between about 35 N and about 60 N, and in other embodiments between about 37 N and about 55 N. The overall stiffness or hardness of the pillow 10 is associated with the stiffness of the individual viscoelastic foam layers 18 and the filler material 34. As such, the overall stiffness or hardness of the pillow 10 may be affected by varying the stiffness of the individual viscoelastic foam layers 18 and/or the filler material 34.

The viscoelastic foam layers 18 of the sleeve 14 are, in some embodiments, about 10 mm thick and can have thermally-responsive properties as described above. The viscoelastic foam of the filler material 34 can have similar thermal thermally-responsive properties. A suitable thickness for the viscoelastic foam layers 18 for an average weight pillow, for example, can be between about 5 mm and 15 mm. However, a suitable thickness for the viscoelastic foam layers 18 for a lightweight pillow, for example, can be less than about 7 mm. Further, a suitable thickness for the viscoelastic foam layers 18 for a heavyweight pillow, for example, can be greater than about 13 mm. The viscoelastic foam layers 18 are made from a washable viscoelastic polyurethane foam material as will be further described.

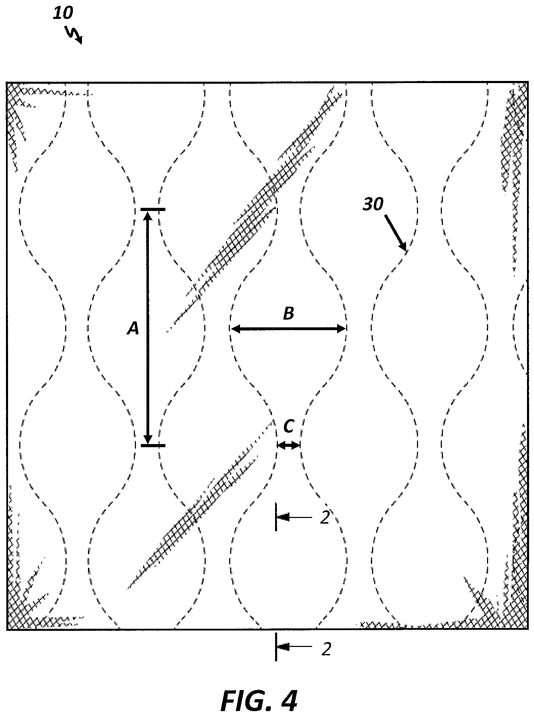

As shown in FIGS. 1-3, the sleeve 14 also includes a fabric layer 22 covering the outside surface of each viscoelastic foam layer 18 and a fabric layer 26 covering the inside surface of each viscoelastic foam layer 18. In some embodiments (e.g., the illustrated embodiment), the fabric layer 26 covering the inside surface of each viscoelastic foam layer 18 is a netting layer, although other types of fabric can be instead be used. Accordingly, reference to a "netting" fabric layer for the inside surface of the viscoelastic foam layers 18 is made herein only by way of example. In some embodiments, a first viscoelastic foam layer 18a is sewn together with a first fabric layer 22a and a first netting layer 26a, respectively, covering opposing sides of the first viscoelastic foam layer 18a to form a first layered panel 28a (FIGS. 1 and 2). Similarly, a second viscoelastic foam layer 18b is sewn together with a second fabric layer 22b and a second netting layer 26b covering opposing sides of the second viscoelastic foam layer 18b to form a second layered panel 28b. For example, fabric and netting layers 22, 26 may be stitched to a viscoelastic foam layer 18 along their edges (e.g., with stitches extending fully through the fabric and netting layers 22, 26 and the viscoelastic foam layer 18). In addition, the layers of each panel 28 may be quilted together across the face of each panel 28, that is, between the edges of the connected layers 18, 22, 26 (again, with stitching 30 (FIG. 3) that extends through and joins all three layers 18, 22, 26) and that may define a quilting pattern. An exemplary quilting pattern is shown in FIG. 4. In the illustrated embodiment, stitching 30 assumes a waveform pattern having a wavelength A, a maximum distance B between adjacent waveforms, and a minimum distance C between adjacent waveforms. In some embodiments, the wavelength A may be between about 20 and 30 centimeters, and in other embodiments may be about 26 centimeters. In some embodiments, the maximum distance B between adjacent waveforms may be between about 5 and 15 centimeters, and in other embodiments may be about 12 centimeters. In some embodiments, the minimum distance C between adjacent waveforms may be between about 1 and 10 centimeters, and in other embodiments may be about 3 centimeters. Any other quilting pattern can be used across the face of each panel 28, such as, for example, rectangular, square, circular, linear, rope, zigzag, crosshatch, swirl, and starburst patterns.

With continued reference to FIG. 3, the fabric layers 22 and netting layers 26 may serve to anchor the stitches 30 that secure the fabric, netting, and viscoelastic foam layers 22, 26, 18 of the panels 28 together. Without the reinforcing fabric and netting layers 22, 26, the less durable viscoelastic foam layers 18 would have to anchor the stitches 30 directly. Anchoring stiches 30 in the viscoelastic foam layers 18 could result in tearing of the foam near the stitches 30 as a result of normal use of the pillow 10. Therefore, the reinforcing fabric and netting layers 22, 26 provide a measure of durability to the pillow 10. In addition, quilting through the three layers 18, 22, 26 along the edges and/or across the face of each panel 28 provides additional mechanical reinforcement that protects the viscoelastic foam layer 18 of each panel 28 from cracking or tearing when washed and dried. In some embodiments, the quilt stitching length may be about 2.5 stitches per centimeter and may use core spun thread for added strength. The fabric and netting layers 22, 26 are, in some embodiments, made from durable materials, such as cotton, polyester, a cotton/polyester blend, and so forth. In other embodiments, the netting layer 26 is made from a polyester single jersey material.

During manufacture, first and second layered panels 28a, 28b are sewn together to form the sleeve 14 with an open end, whereby the netting layers 26 comprise the inner layers of the sleeve 14 facing the cavity 12, and the fabric layers 22 comprise the outer layers of the sleeve 14. The filler material 34 is then inserted through the open end of the sleeve 14 until the desired amount of filler material is positioned within the sleeve. The open end of the sleeve 14 is then sewn closed (FIG. 2), thereby encasing the filler material 34 within the sleeve 14 and defining the pillow 10.

With reference to FIG. 1, the pillow 10 may then be inserted within a cover 36. The cover 36 surrounds and encases the pillow 10 and conforms to the shape of the pillow 10. The cover 36, in some embodiments, is made from a durable and washable fabric material, such as a cotton/polyester blend. As shown in FIG. 1, a slot 40 extends across the cover 36 along the cover's edge. The pillow 10 may be inserted into the cover 36 through the slot 40. The pillow 10 may also be removed from the cover 36 through the slot 40 to facilitate cleaning of the cover 36. The slot 40 is resealable to close the cover 36 around the pillow 10 and to open the cover 36 for removing the pillow 10. A closure device 44 is used to open and close the slot 40. In the illustrated embodiment, the closure device 44 is a zipper, although the closure device 44 could alternatively comprise snaps, buttons, hook and loop fastener material, overlapping flaps, laces, or other suitable fasteners.

A suitable density for the viscoelastic foam filler material 34 for an average weight pillow, for example, can be between about 30 and about 140 kg/m³. In some embodiments of the present invention, the filler material 34 is granulated, or shredded, viscoelastic foam having a density of about 65 kg/m³ for a firmer-feel pillow. A suitable density for granulated viscoelastic foam filler material 34 for relatively lightweight pillow having a relatively soft feel, for example, can be about 45 kg/m³. In another embodiment, a medium-weight pillow having a medium feel can be produced using a 1:1 mixture of granulated viscoelastic foam having densities of about 65 kg/m³ and about 45 kg/m³. Alternatively, the granulated viscoelastic foam utilized as the filler material 34 can have any density in accordance with the desired characteristics of the pillow 10. In addition, a viscoelastic foam filler material 34 may in some embodiments possesses an indentation load deflection, or "ILD," of 65% between 100-500 N loading, and a maximum 10% rebound according to the test procedure governed by the ASTM-D-1564 standard.

The granulated filler material 34 can be made up of recycled, virgin, or scrap viscoelastic material. The granulated filler material 34 may consist of pieces of a nominal length, or the granulated filler material 34 may consist of pieces of varying lengths. For example, granulated filler material 34 may have a nominal length of about 1.3 cm. Also, granulated filler material 34 may consist of varying lengths between about 0.6 cm and about 2 cm. The granulated filler material 34 can be as short as 0.3 cm and as long as 4 cm, or the filler material 34 can be any length in accordance with the desired characteristics of the pillow 10. In some embodiments, the granulated filler material 34 is comprised of 16-20% having a length longer than 2 cm, 38-42% having a length between 1 and 2 cm, and 38-42% of the pieces shorter than 1 cm. Significant cost savings and waste reduction can be realized by using scrap or recycled filler material rather than virgin filler material.

The viscoelastic foam used for the sleeve 14 and the filler material 34 may be made from a polyurethane foam material. The viscoelastic foam(s) can be selected for responsiveness to any range of temperatures. However, in some embodiments, temperature responsiveness in a range of a user's body temperatures (or in a range of temperatures to which the pillow 10 is exposed by proximity to a user's body resting thereon) can provide advantages. As used herein, a viscoelastic foam is considered "responsive" to temperature changes if the viscoelastic foam exhibits a change in hardness of at least 10% measured by ISO Standard 3386 through the range of temperatures between 10 and 30 degrees Celsius.

The viscoelastic foams used for the sleeve 14 and filler material 34 may exhibit substantial hydrophobicity, which limits swelling and water absorption during washing, and facilitates drying of the pillow 10. Numerous methods may be used to measure the hydrophobicity of a material. For example, hydrophobicity can be assessed by measuring he contact angle between the surface of a product and the edge of a water droplet deposited on the surface of the product. In general, a higher contact angle indicates greater hydrophobicity. Another common method for measuring hydrophobicity uses standard water ratings, which tests a material for absorption of liquid droplets containing water and an increasing proportion of isopropanol. In the standard rating scale, W0 corresponds to 100% water, and W10 corresponds to 100% isopropanol. Each incremental increase in the proportion of isopropanol lowers the cohesive properties within the droplet and therefore makes the droplet more susceptible to being absorbed into the material. Another method for measuring hydrophobicity involves measuring water uptake of a product. An article may be washed in a commercially available washing machine, for example, at a water temperature of 60 degrees Celsius. The article is then dried for two hours in a commercially available tumble dryer and subsequently allowed to rest for at least 1 hour in a climate-controlled environment at 23 degrees Celsius with 50% humidity. The weight of the article is measured before and after the wash/dry/rest treatment, and those weights are compared, and the percentage weight increase of the article after the wash/dry/rest treatment, if any, can be used to determine the hydrophobicity in terms of water uptake. A value of about 5% or less in the water uptake test described above typically corresponds to the upper threshold at which people will describe an article as feeling dry to the touch. The viscoelastic foams used for the sleeve 14 and the filler material 34 of the pillow 10 may exhibit a water uptake between about 0% and about 5%, in some embodiments between about 1% and about 5%, and in some embodiments between about 1% and about 3%. The viscoelastic foams used for the sleeve 14 and the filler material 34 of the pillow 10 may exhibit a water uptake of less than about 5%, in some embodiments less than about 4%, and in some embodiments less than about 3%. The remaining water present in the viscoelastic foams immediately following the water uptake test may evaporate during subsequent use.

The viscoelastic foams used for the sleeve 14 and filler material 34 may have relatively large and open cells within the foam matrix, which facilitates drying. In other words, the cells of the viscoelastic foam may be essentially skeletal structures in which many (if not substantially all) of the cell walls separating one cell from another do not exist-the cells are defined by a plurality of supports or "windows" and by no cell walls, substantially no cell walls, or by a substantially reduced number of cell walls. In some embodiments, the cells may be substantially round and uniform in size and shape. Cell size may be measured using various methods familiar to those of ordinary skill in the art; for example, cell size may be measured using Porescan equipment. The foams used for the sleeve 14 and filler material 34 of the pillow 10 may have an average cell size (in vertical and/or horizontal diameter) between about 0.16 mm and about 0.19 mm, and in some embodiments between about 0.17 mm and about 0.19 mm, and in other embodiments between about 0.17 and about 0.18 mm. In other words, the foams used for the sleeve 14 and filler material 34 of the pillow 10 may have an average cell density between about 50 and about 65 cells/cm, and in some embodiments between about 52 and about 63 cells/cm, and in other embodiments between about 59 and about 62 cells/cm. In addition, the viscoelastic foams used for the sleeve 14 and filler material 34 may exhibit high air permeability, which also speeds and improves drying. Air permeability may be measured using various methods known to those of ordinary skill in the art, for example, according to ASTM D3574 or EN ISO 7231, using test samples with a size of 38 cm² or 25 cm² at a constant pressure of 125 Pa. When tested with a sample size of 38 cm² under 125 Pa constant pressure, the viscoelastic foams of the sleeve 14 and the filler material 34 of the pillow 10 may have air permeability of at least about 1.0 liters per second (L/s), at least about 2.0 L/s, at least about 3.0 L/s, or at least about 4.0 L/s. The viscoelastic foams of the sleeve 14 and the filler material 34 of the pillow 10 may have air permeability between about 1.0 L/s and about 5.0 L/s, in other embodiments between about 2.0 and about 5.0 L/s, and in still other embodiments between about 2.0 and about 4.0 L/s.

Suitable viscoelastic foams for the sleeve 14 and filler material 34 may be produced, for example, using a process that comprises polyisocyanate and polymeric compounds having isocyanate-reactive groups. For example, such viscoelastic foams can be made in accordance with methods disclosed in U.S. Patent Application Publication No. 2013/0150476. Some embodiments may comprise a chain-extending or crosslinking agent, a compound having one isocyanate-reactive group, a catalyst, or a blowing agent, or any combination of the foregoing.

Useful polyisocyanates include in principle any known compounds having two or more isocyanate groups in the molecule, alone or in combination. Diisocyanates are preferable. The process preferably uses diphenylmethane diisocyanate (MDI), tolylene diisocyanate (TDI), or MDI-TDI mixtures. The diphenylmethane diisocyanate used can be monomeric diphenyl diisocyanate selected from the group consisting of 2,2'-diphenylmethane diisocyanate, 2,4'-diphenylmethane diisocyanate or 4,4'-diphenylmethane diisocyanate, or mixtures of two or all three isomers, and also mixtures of one or more monomeric diphenylmethane diisocyanates with higher-nuclear homologs of diphenylmethane diisocyanate. The viscosity of diphenylmethane diisocyanate at 20 degrees Celsius is preferably less than 200 mPas, more preferably less than 150 mPas and more preferably less than 100 mPas. It is particularly preferable for the proportion of 2,2'-diphenylmethane diisocyanate to be less than 5 wt %, based on the total weight of polyisocyanates.

When TDI is used, it will usually be mixtures of the 2,4- and the 2,6-isomer which are used. Commercially available mixtures with 80% 2,4 and 60% 2,6 TDI and 35% 2,4 and 35% 2,6 TDI are particularly preferable.

In place of pure isocyanates or blended with these, so-called modified isocyanates can be used. These modified isocyanates may be formed for example through incorporation of groups into the polyisocyanates. Examples of such groups are urethane, allophanate, carbodiimide, uretoneimine, isocyanurate, urea and biuret groups.

Particular preference is given to polyisocyanates modified with urethane groups, these polyisocyanates being typically prepared by reacting the isocyanates with a deficiency of compounds having two or more isocyanate-reactive hydrogen atoms. Compounds formed therefrom are frequently referred to as NCO prepolymers. The compounds used and having two or more isocyanate-reactive hydrogen atoms are preferably polymeric compounds having isocyanate-reactive groups and/or chain-extending and/or crosslinking agents. Particular preference is likewise given to carbodiimide- or uretoneimine-containing polyisocyanates, which are formed by specific catalyzed reaction of isocyanates with themselves. Mixtures of TDI and MDI can also be used.

Polymeric compounds having isocyanate-reactive groups have an average molecular weight of at least 450 g/mol and more preferably in the range from 460 to 12,000 g/mol, and have two or more isocyanate-reactive hydrogen atoms per molecule. Polymeric compounds having isocyanate-reactive groups preferably include polyester alcohols and/or polyether alcohols having a functionality of 2 to 8, especially of 2 to 6 and preferably 2 to 4 and an average equivalent molecular weight in the range from 400 to 3000 g/mol and preferably in the range from 1000 to 2500 g/mol. In some embodiments, polyether alcohols are used.

Polyether alcohols are obtainable by known methods, usually via catalytic addition of alkylene oxides, especially ethylene oxide and/or propylene oxide, onto H-functional starter substances, or via condensation of tetrahydrofuran. When alkylene oxides are used, the products are also known as polyalkylene oxide polyols. Useful H-functional starter substances include especially polyfunctional alcohols and/or amines. Preference is given to using water, dihydric alcohols, for example ethylene glycol, propylene glycol, or butane diols, trihydric alcohols, for example glycerol or trimethylolpropane, and also more highly hydric alcohols, such as pentaerythritol, sugar alcohols, for example sucrose, glucose or sorbitol. Preferable amines are aliphatic amines having up to 10 carbon atoms, for example ethylenediamine, diethylenetriamine, propylenediamine, and also amino alcohols, such as ethanolamine or diethanolamine. The alkylene oxides used are preferably ethylene oxide and/or propylene oxide, while polyether alcohols used for preparing flexible polyurethane foams frequently have an ethylene oxide block added at the chain end. Useful catalysts for the addition reaction of alkylene oxides include especially basic compounds in that potassium hydroxide is industrially highly important. When the level of unsaturated constituents in the polyether alcohols is to be low, di- or multi-metal cyanide compounds, so-called DMC catalysts, can also be used as catalysts. Viscoelastic flexible polyurethane foams can be produced using especially two- and/or three-functional polyalkylene oxide polyols.

Useful compounds having two or more active hydrogen atoms further include polyester polyols obtainable for example from organic dicarboxylic acids having 2 to 12 carbon atoms, preferably aliphatic dicarboxylic acids having 8 to 12 carbon atoms, and polyhydric alcohols, preferably diols, having 2 to 12 carbon atoms and preferably 2 to 6 carbon atoms. Useful dicarboxylic acids include for example succinic acid, glutaric acid, adipic acid, suberic acid, azelaic acid, sebacic acid, decanedicarboxylic acid, maleic acid, fumaric acid, phthalic acid, isophthalic acid, terephthalic acid and the isomeric naphthalene dicarboxylic acids. Use of adipic acid is preferable. The dicarboxylic acids can be used not only individually but also mixed with one another. Instead of the free dicarboxylic acids, it is also possible to use the corresponding dicarboxylic acid derivatives, for example dicarboxylic esters of alcohols having 1 to 4 carbon atoms or dicarboxylic anhydrides.

Examples of alcohols having two or more hydroxyl groups and especially diols are: ethanediol, diethylene glycol, 1,2-propanediol, 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, 1,5-pentanediol, 1,6-hexanediol or mixtures of two or more thereof, especially mixtures of 1,4-butanediol, 1,5-pentanediol and 1,6-hexanediol. It is further possible to use polyester polyols formed from lactones, e.g., ε-caprolactone, or hydroxy carboxylic acids, e.g., ω-hydroxycaproic acid and hydroxybenzoic acids. The use of dipropylene glycol is preferred.

The polymeric compounds having isocyanate-reactive groups comprise (1) 10 to 40 wt % of at least one polyalkylene oxide having a hydroxyl number of 90 to 300 mg KOH/g, based on a 3 to 6-functional starter molecule and a propylene oxide fraction, based on the alkylene oxide content, of 80 to 100 wt %, (2) 5 to 20 wt % of at least one polyalkylene oxide having a hydroxyl number of 10 to 60 mg KOH/g, based on a 2 to 4-functional starter molecule and a propylene oxide fraction, based on the alkylene oxide content, of 80 to 100 wt %, (3) 10 to 50 wt % of at least one polyalkylene oxide having a hydroxyl number of 10 to 55 mg KOH/g, based on a 2 to 4-functional starter molecule and an ethylene oxide fraction, based on the alkylene oxide content, of 70 to 100 wt %, and (4) 0 to 20 wt %, preferably 1-20 wt % of at least one polyalkylene oxide having a hydroxyl number of 50 to 200 mg KOH/g, preferably 56-200 mg KOH/g, based on a 2-functional starter molecule and an ethylene oxide fraction, based on the alkylene oxide content, of 80 to 100 wt %, all based on the total weight of polymeric compounds having isocyanate-reactive groups.

It is preferable to use exclusively polyether polyols as polymeric compounds having isocyanate-reactive groups. It is preferred that the polymeric compounds having isocyanate-reactive groups comprise the polyetherols (1) to (4) at not less than 80 wt %, preferably not less than 85 wt %, more preferably not less than 90 wt % and especially not less than 95 wt %, all based on the total weight of the polymer compounds having isocyanate-reactive groups. In some preferred embodiments, the polymeric compounds having isocyanate-reactive groups, in addition to the polyetherols (1) to (4) do not contain any further polymeric compounds having isocyanate-reactive groups.

It is particularly preferable for the polyetherols, aside from the starter, to include essentially exclusively ethylene oxide and propylene oxide units. Here "essentially" is to be understood as meaning that small amounts of other alkylene oxide units are not disadvantageous. The fraction of alkylene oxide units other than ethylene oxide or propylene oxide units is preferably less than 5 wt %, more preferably less than 1 wt % and especially 0 wt %, all based on the total weight of alkylene oxide units.

In some embodiments, the chain-extending agents and/or crosslinking agents used are substances having a molecular weight of below 400 g/mol and preferably in the range from 60 to 350 g/mol, chain extenders having 2 isocyanate-reactive hydrogen atoms and crosslinkers having 3 or more isocyanate-reactive hydrogen atoms. These can be used individually or in the form of mixtures. Preference is given to using diols and/or triols having molecular weights less than 400, more preferably in the range from 60 to 300 and especially in the range from 60 to 150. Possibilities are for example, aliphatic, cycloaliphatic and/or aromatic diols, and also diols having aromatic structures, with 2 to 14 and preferably 2 to 10 carbon atoms, such as ethylene glycol, 1,3-propanediol, 1,10-decanediol, o-dihydroxycyclohexane, m-dihydroxycyclohexane, p-dihydroxycyclohexane, diethylene glycol, dipropylene glycol and preferably 1,4-butanediol, 1,6-hexanediol and bis(2-hydroxyethyl)hydroquinone, triols, such as 1,2,4-trihydroxycyclohexane, 1,3,5-trihydroxycyclohexane, glycerol and trimethylolpropane, and low molecular weight hydroxyl-containing polyalkylene oxides based on ethylene oxide and/or 1,2-propylene oxide and the aforementioned diols and/or triols as starter molecules. Particular preference for use as chain extenders is given to monoethylene glycol, 1,4-butanediol and/or glycerol.

When chain-extending agents, crosslinking agents or mixtures thereof are used, the amounts in which they are used are advantageously in the range from 0.1 to 20 wt %, preferably in the range from 0.5 to 10 wt % and especially in the range from 0.8 to 5 wt %, based on the weight of the polymeric compounds having isocyanate-reactive groups and the chain-extending agents.

In addition to polymeric compounds having isocyanate-reactive groups, it is optionally also possible to use one or more compounds having just one isocyanate-reactive group. These compounds are for example monoamines, monothiols and/or monoalcohols, for example, based on polyethers, polyesters or polyether-polyesters. Monoalcohols used for example are more preferably polyether monools obtained on the basis of monofunctional starter molecules, for example ethylene glycol monomethyl ether. These are obtainable similarly to the polyetherols described above via polymerization of alkylene oxide onto the starter molecule. Polyether monools preferably have a high proportion of primary OH groups. It is particularly preferable to prepare polyether monools using ethylene oxide as sole alkylene oxide. Preferable monools further include compounds having an aromatic group. The number average molecular weight of compounds having one isocyanate-reactive group is preferably in the range from 50 to 1000 g/mol, more preferably in the range from 80 to 300 g/mol and especially in the range from 100 to 200 g/mol. When compounds having one isocyanate-reactive group are used, they are preferably used in a proportion of 0.1 to 5 wt % and more preferably 0.5 to 4.5 wt %, based on the total weight of polymeric compounds having isocyanate-reactive groups and compounds having just one isocyanate-reactive group.

Useful catalysts for preparing the viscoelastic polyurethane foams are preferably compounds which greatly speed the reaction of the hydroxyl-containing components with the polyisocyanates and/or the reaction of isocyanates with water. Examples are amidines, such as 2,3-dimethyl-3,4,5,6-tetrahydropyrimidine, tertiary amines, such as triethylamine, tributylamine, dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylene-triamine, tetramethyldiaminoethyl ether, bis(dimethylaminopropyl)urea, dimethylpiperazine, 1,2-dimethylimidazole, 1-azabicyclo-(3,3,0)-octane and preferably 1,4-diazabicyclo-(2,2,2)-octane and alkanolamine compounds, such as triethanolamine, triisopropanolamine, N-methyl-diethanolamine, N-ethyldiethanolamine and dimethylethanolamine. Similarly suitable are organic metal compounds, preferably organic tin compounds, such as tin(II) salts of organic carboxylic acids, e.g., tin(II) acetate, tin(II) octoate, tin(II) ethylhexanoate and tin(II) laurate, and the dialkyltin(IV) salts of organic carboxylic acids, for example dibutyltin diacetate, dibutyltin dilaurate, dibutyltin maleate and dioctyltin diacetate, and also bismuth carboxylates, such as bismuth(III) neodecanoate, bismuth 2-ethylhexanoate and bismuth octanoate, or mixtures thereof. The organic metal compounds can be used alone or preferably in combination with strong basic amines. When the polymeric compound having isocyanate-reactive groups is an ester, it is preferable to use exclusively amine catalysts.

Preference is given to using from 0.001 to 5 wt % and especially from 0.05 to 2 wt % of catalyst or catalyst combination, based on the weight of the polymeric compound having isocyanate-reactive groups.

Polyurethane foams are further produced in the presence of one or more blowing agents. By way of blowing agents, it is possible to use chemically acting blowing agent and/or physically acting compounds. Chemical blowing agents are compounds which react with isocyanate to form gaseous products, for example water or formic acid. Physical blowing agents are compounds that have been dissolved or emulsified in the reactants of polyurethane synthesis and vaporize under the conditions of polyurethane formation. Examples are hydrocarbons, halogenated hydrocarbons and other compounds, for example perfluorinated alkanes, such as perfluorohexane, chlorofluorocarbons, and ethers, esters, ketones and/or acetals, for example (cyclo)aliphatic hydrocarbons having 4 to 8 carbon atoms, hydrofluorocarbons, such as Solkanes® 365 mfc, or gases, such as carbon dioxide. In one preferable embodiment, the blowing agent used is a mixture of these blowing agents, comprising water and more preferably exclusively water.

The amount of physical blowing agents, if present, in a preferable embodiment is in the range between 1 and 20 wt % and especially 5 and 20 wt %, and the amount of water is preferably in the range between 0.5 and 8 wt % and more preferably between 0.8 and 6 wt % and especially between 1 and 5 wt %, all based on the total weight of other components of the reaction.

Useful auxiliaries and/or addition agents may include for example surface-active substances, foam stabilizers, cell regulators, external and internal release agents, fillers, pigments, dyes, flame retardants, antistats, hydrolysis control agents and also fungistats and bacteriostats.

To produce exemplary viscoelastic polyurethane foams for use in the disclosed pillow 10, the polymeric compounds having isocyanate-reactive groups, the optionally used chain-extending and/or crosslinking agents, the optionally used compounds having just one isocyanate-reactive group with a hydroxyl number of 100 to 500 mg KOH/g, the catalysts, the blowing agents, and also the optionally used auxiliaries and/or addition agents are typically mixed to form a so-called polyol component and reacted in that form with the polyisocyanates. The polyisocyanate prepolymers are reacted with the polyol component. The mixing ratios are chosen here such that the equivalence ratio of NCO groups of polyisocyanates to the sum total of reactive hydrogen atoms of compounds that make up the polyol component is preferably in the range from 0.65 to 1.2:1, preferably in the range from 0.7 to 1.1:1 and especially in the range from 0.1 to 1:1. A ratio of 1:1 here corresponds to an isocyanate index of 100.

The viscoelastic foams used for the sleeve 14 and filler material 34 are preferably produced by the one-shot process, for example using a high-pressure or low-pressure technique. The foams can be obtainable in open or closed metallic molds or via the continuous application of the reaction mixture to belt lines or in troughs to produce foam blocks.

It is particularly advantageous to proceed via the so-called two-component process wherein, as mentioned above, a polyol component is produced and foamed with polyisocyanate. The components are preferably mixed at a temperature in the range between 15 and 120 degrees Celsius and preferably 20 to 80 degrees Celsius and introduced into the mold or onto the belt line. The temperature in the mold is usually in the range between 15 and 120 degrees Celsius and preferably between 30 and 80 degrees Celsius.

In some embodiments, the composition of the filler material 34 can be varied to alter the characteristics of the pillow 10 and the cost of the pillow 10. For example, the filler material 34 may in some embodiments be a combination of granulated viscoelastic foam and a fiber material. The fiber material can be made from any kind of washable textile, such as a natural textile (cotton) or a synthetic textile, which is often less expensive than viscoelastic foam. In some embodiments of the present invention, the fiber material has a density of about 1 g/cm³. However, a suitable density for the fiber material may be, for example, 0.1-2 g/cm³. Further, a suitable density for the fiber material for a softer-feel pillow, for example, can be less than about 0.3 g/cm³. Likewise, a suitable density for the fiber material for a firmer-feel pillow, for example, can be greater than about 1.8 g/cm³. Alternatively, the fiber material used in combination with the granulated viscoelastic foam as the filler material 34 can have any density in accordance with the desired characteristics of the pillow 10.

In some embodiments of the invention, the filler material 34 comprises about 50% washable fiber or other material, while the remaining composition includes granulated viscoelastic foam. However, a suitable range of fiber or other material in the filler material 34 for an average-cost pillow, for example, can be between about 20% and about 80%. Further, a suitable range of fiber or other material in the filler material 34 for a more expensive pillow, for example, can be more than about 30% of the filler material. Likewise, a suitable range of fiber or other material in the filler material 34 for a less expensive pillow, for example, can be greater than about 70% of the filler material.

In some embodiments of the present invention, the filler material 34 may be a combination of granulated viscoelastic foam and polystyrene balls or other polystyrene elements, which are often less expensive than viscoelastic foam. The filler material 34 of this embodiment can also include a washable natural or synthetic fiber material depending on the desired characteristics of the pillow. The polystyrene balls may consist of balls of a nominal diameter, or the polystyrene balls may consist of balls of varying diameters. For example, the polystyrene balls may have a nominal diameter of about 5 mm. Also, the polystyrene balls may consist of varying diameters between about 1 mm and about 10 mm. The polystyrene balls can also be as small as 0.5 mm and as large as 20 mm, or the polystyrene balls can have other dimensions in accordance with the desired characteristics of the pillow 10.

For example, in some embodiments of the invention, the filler material 34 comprises about 50% polystyrene balls, while the remaining composition includes granulated viscoelastic foam. However, a suitable range of polystyrene balls in the filler material 34 for an average-cost pillow, for example, can be between about 20% and about 80%. Further, a suitable range of polystyrene balls in the filler material 34 for a more expensive pillow, for example, can be less than about 30% of the filler material 34. Likewise, a suitable range of polystyrene balls in the filler material 34 for a less expensive pillow, for example, can be greater than about 70% of the filler material 34.

When assembled, the pillow 10 can be washed and optionally subjected to a spin cycle in an ordinary household washing machine, and then tumble dried without damage such as cracked foam and opened seams or loss of mechanical and viscoelastic properties. For example, the pillow 10 should withstand washing temperatures of at least about 40 degrees Celsius, at least about 50 degrees Celsius, at least about 60 degrees Celsius, or at least about 70 degrees Celsius. The pillow may be tumble dried for about 0.5 hour, about 1 hour, about 1.5 hours, or about 2 hours at high heat. In some embodiments, the pillow 10 may pass the ASTM E2149 biocide test for at least about five, at least about seven, or at least about 10 wash and dry cycles.

### EXAMPLES

### Example 1

Coverless pillows embodying the invention were subjected to 36 cycles wash/dry cycles, each including washing at 60 degrees Celsius with standard washing detergent containing optical brightener and a 1600 rpm spin cycle followed by tumble drying at high heat for two hours. The test was conducted pursuant to BS EN ISO 6330:2001.

Results: Through the first 20 wash/dry cycles, an appearance assessment revealed pilling of netting, dimensional changes of up to -3.9% (length) and up to +2.6% (width), and slight yellowing of the sleeve attributable to detergent with optical brightener. Through wash/dry cycles 21-32, an appearance assessment revealed pilling of netting, dimensional changes of up to -4.6% (length) and up to +3.3% (width), slight yellowing of the sleeve attributable to detergent with optical brightener, and occasional opening of stitching at sleeve corners. Through these wash cycles, no stitch opening was detected, nor breakdown of pattern quilting stitches on the sleeve face, nor opening of sleeve seams to expose the filler material, nor breaking of the viscoelastic foam in the sleeve.

### Example 2

Water uptake of samples of viscoelastic foam was tested as follows. Samples were weighed and then washed in a household washing machine at a water temperature of 60 degrees Celsius. Following the wash step, the samples were again weighed. The samples were then tumble dried for two hours in a household dryer, removed from the dryer, and allowed to rest for 24 hours in a climate-controlled room kept at constant 23 degrees Celsius and 50% relative humidity. Samples were weighed again following the rest period, and the values were used to calculate the water uptake for each sample by dividing the weight gain observed after the rest period by the original weight of the foam sample.

| *Sample* | *Weight Pre-Wash (g)* | *Weight Post-Wash (g)* | *Weight Post-Drying and Rest (g)* | *Weight Gain (g)* | *Water Uptake (%)* |
|---|---|---|---|---|---|
| 1 | 1298.2 | 1369.8 | 1324.6 | 26.4 | 2.0 |
| 2 | 1283.4 | 1387.9 | 1330.7 | 47.3 | 3.7 |
| 3 | 1206.0 | 1271.4 | 1213.3 | 7.3 | 0.6 |
| 4 | 1194.7 | 1187.4 | 1193.5 | -1.2 | -0.1 |

Various features of the invention are set forth in the following claims.

## Claims

1. A washable pillow comprising:
a sleeve defining a cavity; and
a filler material positioned within the cavity,
wherein the filler material includes a viscoelastic foam having a hydrophobicity expressed in terms of water uptake between about 0% (w/w) and about 5% (w/w), an average cell size between about 0.16 mm and about 0.19 mm, and an air permeability between about 1.0 liters per second and about 5.0 liters per second.

2. The washable pillow of claim 1, wherein the viscoelastic foam has a hydrophobicity between about 1% (w/w) and about 3% (w/w).

3. The washable pillow of claim 1, wherein the viscoelastic foam has an average cell size between about 0.17 mm and about 0.19 mm.

4. The washable pillow of claim 1, wherein the viscoelastic foam has an air permeability between about 2.0 liters per second and about 4.0 liters per second.

5. The washable pillow of claim 1, wherein the sleeve includes a first viscoelastic foam layer and a second viscoelastic foam layer, and wherein the first and second viscoelastic foam layers are connected together to form the cavity therebetween.

6. The washable pillow of claim 5, wherein each of the first and second viscoelastic foam layers has a hydrophobicity expressed in terms of water uptake of less than about 5% (w/w), an average cell size between about 0.17 mm and about 0.19 mm, and an air permeability of at least about 1.0 liters per second.

7. The washable pillow of claim 5, wherein each of the first and second viscoelastic foam layers has a thickness of about 10 mm.

8. The washable pillow of claim 5, wherein the sleeve further includes a first fabric layer covering an exterior surface of the first viscoelastic foam layer and a second fabric layer covering an exterior surface of the second viscoelastic foam layer, and wherein the first and second fabric layers are connected to the first and second viscoelastic foam layers, respectively.

9. The washable pillow of claim 8, wherein the first and second fabric layers are stitched to the first and second viscoelastic foam layers, respectively, along edges of each of the layers.

10. The washable pillow of claim 9, wherein the sleeve further includes a first netting layer covering an interior surface of the first viscoelastic foam layer and a second netting layer covering an interior surface of the second viscoelastic foam layer, and wherein the first and second netting layers are connected to the first and second viscoelastic foam layers, respectively.

11. The washable pillow of claim 10 wherein the first and second netting layers are stitched to the first and second viscoelastic foam layers, respectively, along edges of each of the layers.

12. The washable pillow of claim 11, wherein the first fabric layer, the first viscoelastic foam layer, and the first netting layer are quilted between the edges of the connected layers.

13. The washable pillow of claim 12, wherein the second fabric layer, the second viscoelastic foam layer, and the second netting layer are quilted between the edges of the connected layers.

14. The washable pillow of claim 1, wherein the viscoelastic foam is granulated.

15. A washable pillow comprising:
a sleeve including a first panel and a second panel connected to the first panel along edges of the respective panels to form a cavity therebetween;
a filler material positioned within the cavity, the filler material including a viscoelastic foam having a hydrophobicity expressed in terms of water uptake between about 0% (w/w) and about 5% (w/w); and
stitching extending through each of the first and second panels to define a quilting pattern between the edges of the connected panels,
wherein each of the first and second panels includes a viscoelastic foam layer, a netting layer adjacent an interior surface of the viscoelastic foam layer, and a fabric layer adjacent an exterior surface of the viscoelastic foam layer.

16. The washable pillow of claim 15, wherein the quilting pattern is on a face of each of the panels.

17. The washable pillow of claim 16, wherein the quilting pattern includes waveforms having a wavelength of about 26 centimeters.

18. The washable pillow of claim 17, wherein a maximum distance between adjacent waveforms is about 12 centimeters, and wherein a minimum distance between adjacent waveforms is about 3 cm.

19. The washable pillow of claim 15, wherein the netting layers of the first and second panels, respectively, are in facing relationship with the viscoelastic foam filler material being disposed therebetween.

20. The washable pillow of claim 15, wherein the viscoelastic foam is granulated.

21. The washable pillow of claim 15, wherein the viscoelastic foam filler material and the viscoelastic foam layers of the first and second panels, respectively, have a hydrophobicity between about 2% (w/w) and about 4% (w/w).

22. The washable pillow of claim 15, wherein the viscoelastic foam filler material and the viscoelastic foam layers of the first and second panels, respectively, have an average cell size between about 0.16 mm and about 0.19 mm.

23. The washable pillow of claim 22, wherein the viscoelastic foam filler material and the viscoelastic foam layers of the first and second panels, respectively, have an average cell size between about 0.17 mm and about 0.19 mm.

24. The washable pillow of claim 15, wherein the viscoelastic foam filler material and the viscoelastic foam layers of the first and second panels, respectively, have an air permeability between about 1.0 liters per second and about 5.0 liters per second.

25. The washable pillow of claim 24, wherein the viscoelastic foam filler material and the viscoelastic foam layers of the first and second panels, respectively, have an air permeability between about 2.0 liters per second and about 5.0 liters per second.

## Patentansprüche

1. Waschbares Kissen, umfassend:
- eine Hülle, die einen Hohlraum bildet; und
- einen Füllstoff, der innerhalb des Hohlraums positioniert ist,
- wobei der Füllstoff einen viskoelastischen Schaum mit einer Hydrophobie umfasst, die hinsichtlich einer Wasseraufnahme zwischen ungefähr 0 % (w/w) und ungefähr 5 % (w/w), einer durchschnittlichen Zellgröße zwischen ungefähr 0,16 mm und ungefähr 0,19 mm und einer Luftdurchlässigkeit zwischen ungefähr 1,0 l/s und ungefähr 5,0 l/s ausgedrückt wird.

2. Waschbares Kissen gemäß Anspruch 1, wobei der viskoelastische Schaum eine Hydrophobie zwischen ungefähr 1 % (w/w) und ungefähr 3 % (w/w) aufweist.

3. Waschbares Kissen gemäß Anspruch 1, wobei der viskoelastische Schaum eine durchschnittliche Zellengröße zwischen ungefähr 0,17 mm und ungefähr 0,19 mm aufweist.

4. Waschbares Kissen gemäß Anspruch 1, wobei der viskoelastische Schaum eine Luftdurchlässigkeit von ungefähr 2,0 l/s und ungefähr 4,0 l/s aufweist.

5. Waschbares Kissen gemäß Anspruch 1, wobei die Hülle eine erste viskoelastische Schaumschicht und eine zweite viskoelastische Schaumschicht umfasst, und wobei die ersten und zweiten viskoelastischen Schaumschichten miteinander verbunden sind, um dazwischen den Hohlraum zu bilden.

6. Waschbares Kissen gemäß Anspruch 5, wobei jede der ersten und zweiten viskoelastischen Schaumschichten eine Hydrophobie aufweisen, die hinsichtlich einer Wasseraufnahme von weniger als ungefähr 5 % (w/w), eine durchschnittliche Zellgröße zwischen ungefähr 0,17 mm und ungefähr 0,19 mm und eine Luftdurchlässigkeit von zumindest ungefähr 1,0 l/s ausgedrückt wird.

7. Waschbares Kissen gemäß Anspruch 5, wobei jede der ersten und zweiten viskoelastischen Schaumschichten eine Dicke von ungefähr 10 mm aufweist.

8. Waschbares Kissen gemäß Anspruch 5 wobei die Hülle ferner eine erste Gewebelage, die eine äußere Fläche der ersten viskoelastischen Schaumschicht bedeckt, und eine zweite Gewebelage, die eine äußere Fläche der zweiten viskoelastischen Schaumschicht bedeckt, und wobei die ersten und zweiten Gewebelagen jeweils mit den ersten und zweiten viskoelastischen Schaumschichten verbunden sind.

9. Waschbares Kissen gemäß Anspruch 8, wobei die ersten und zweiten Gewebelagen jeweils mit den ersten und zweiten viskoelastischen Schaumschichten entlang von Kanten von jeder der Schichten vernäht sind.

10. Waschbares Kissen gemäß Anspruch 9, wobei die Hülle ferner eine erste Netzmateriallage, die eine innere Fläche der ersten viskoelastischen Schaumschicht bedeckt, und eine zweite Netzmateriallage, die eine innere Fläche der zweiten viskoelastischen Schaumschicht bedeckt, umfasst, und wobei die ersten und zweiten Netzmateriallagen jeweils mit den ersten und zweiten viskoelastischen Schaumschichten verbunden sind.

11. Waschbares Kissen gemäß Anspruch 10, wobei die ersten und zweiten Netzmateriallagen jeweils mit den ersten und zweiten viskoelastischen Schaumschichten entlang von Kanten von jeder der Schichten vernäht sind.

12. Waschbares Kissen gemäß Anspruch 11, wobei die erste Gewebelage, die erste viskoelastische Schaumschicht und die erste Netzmateriallage zwischen den Kanten der verbundenen Schichten gesteppt sind.

13. Waschbares Kissen gemäß Anspruch 12, wobei die zweite Gewebelage, die zweite viskoelastische Schaumschicht und die zweite Netzmateriallage zwischen den Kanten der verbundenen Schichten gesteppt sind.

14. Waschbares Kissen gemäß Anspruch 1, wobei der viskoelastische Schaum granuliert ist.

15. Waschbares Kissen, umfassend:
- eine Hülle mit einer ersten Platte und einer zweiten Platte, die mit der ersten Platte entlang von Kanten der jeweiligen Platten verbunden ist, um dazwischen einen Hohlraum zu bilden;
- einen Füllstoff der innerhalb des Hohlraums positioniert ist, wobei der Füllstoff einen viskoelastischen Schaum mit einer Hydrophobie umfasst, der bezüglich einer Wasseraufnahme zwischen ungefähr 0 % (w/w) und ungefähr 5 % (w/w) ausgedrückt wird; und
- eine Naht, die sich durch jede der ersten und zweiten Platten erstreckt, um ein gestepptes Muster zwischen den Kanten der verbundenen Platten zu bilden,
- wobei jede der ersten und zweiten Platten eine viskoelastische Schaumschicht, eine Netzmateriallage, die zu einer inneren Fläche der viskoelastischen Schaumschicht benachbart ist, und eine Gewebelage, die zu einer äußeren Fläche der viskoelastischen Schaumschicht benachbart ist, umfasst.

16. Waschbares Kissen gemäß Anspruch 15, wobei das gesteppte Muster auf einer Fläche von jeder der Platten ist.

17. Waschbares Kissen gemäß Anspruch 16, wobei das gesteppte Muster Wellenformen mit einer Wellenlänge von ungefähr 26 cm umfasst.

18. Waschbares Kissen gemäß Anspruch 17, wobei ein maximaler Abstand zwischen benachbarten Wellenformen ungefähr 12 cm beträgt, und wobei ein minimaler Abstand zwischen benachbarten Wellenformen ungefähr 3 cm beträgt.

19. Waschbares Kissen gemäß Anspruch 15, wobei die Netzmateriallagen der jeweiligen ersten und zweiten Platten in einem zugewandten Verhältnis mit dem viskoelastischen Schaum-Füllstoff sind, der dazwischen angeordnet ist.

20. Waschbares Kissen gemäß Anspruch 15, wobei der viskoelastische Schaum granuliert ist.

21. Waschbares Kissen gemäß Anspruch 15, wobei der viskoelastische Schaum-Füllstoff und die viskoelastischen Schaumschichten der jeweiligen ersten und zweiten Platten eine Hydrophobie zwischen ungefähr 2 % (w/w) und ungefähr 4 % (w/w) aufweisen.

22. Waschbares Kissen gemäß Anspruch 15, wobei der viskoelastische Schaum-Füllstoff und die viskoelastischen Schaumschichten der ersten und zweiten Platte jeweils eine durchschnittliche Zellgröße zwischen ungefähr 0,16 mm und ungefähr 0,19 mm aufweisen.

23. Waschbares Kissen gemäß Anspruch 22, wobei der viskoelastische Schaum-Füllstoff und die viskoelastischen Schaumschichten der ersten und zweiten Platten jeweils eine durchschnittliche Zellgröße zwischen ungefähr 0,17 mm und ungefähr 0,19 mm aufweisen.

24. Waschbares Kissen gemäß Anspruch 15, wobei der viskoelastische Schaum-Füllstoff und die viskoelastischen Schaumschichten der ersten und zweiten Platten jeweils eine Luftdurchlässigkeit zwischen ungefähr 1,0 l/s und ungefähr 5,0 l/s aufweisen.

25. Waschbares Kissen gemäß Anspruch 24, wobei der viskoelastische Schaum-Füllstoff und die viskoelastischen Schaumschichten der ersten und zweiten Platten jeweils eine Luftdurchlässigkeit zwischen ungefähr 2,0 l/s und ungefähr 5,0 l/s aufweisen.

## Revendications

1. Oreiller lavable comprenant :
une enveloppe définissant une cavité ; et
un matériau de remplissage positionné à l'intérieur de la cavité,
dans lequel le matériau de remplissage comporte une mousse viscoélastique ayant une hydrophobicité exprimée en termes d'absorption d'eau comprise entre environ 0% (p/p) et environ 5% (p/p), une taille d'alvéole moyenne comprise entre environ 0,16 mm et environ 0,19 mm, et une perméabilité à l'air comprise entre environ 1,0 litre par seconde et environ 5,0 litres par seconde.

2. Oreiller lavable de la revendication 1, dans lequel la mousse viscoélastique a une hydrophobicité comprise entre environ 1% (p/p) et environ 3% (p/p).

3. Oreiller lavable de la revendication 1, dans lequel la mousse viscoélastique a une taille d'alvéole moyenne comprise entre environ 0,17 mm et environ 0,19 mm.

4. Oreiller lavable de la revendication 1, dans lequel la mousse viscoélastique a une perméabilité à l'air comprise entre environ 2,0 litres par seconde et environ 4,0 litres par seconde.

5. Oreiller lavable de la revendication 1, dans lequel l'enveloppe comporte une première couche de mousse viscoélastique et une deuxième couche de mousse viscoélastique, et dans lequel les première et deuxième couches de mousse viscoélastique sont reliées ensemble pour former la cavité entre elles.

6. Oreiller lavable de la revendication 5, dans lequel chacune des première et deuxième couches de mousse viscoélastique a une hydrophobicité exprimée en termes d'absorption d'eau inférieure à environ 5% (p/p), une taille moyenne d'alvéole comprise entre environ 0,17 mm et environ 0,19 mm, et une perméabilité à l'air au moins d'environ 1,0 litre par seconde.

7. Oreiller lavable de la revendication 5, dans lequel chacune des première et deuxième couches de mousse viscoélastique a une épaisseur d'environ 10 mm.

8. Oreiller lavable de la revendication 5, dans lequel l'enveloppe comporte en outre une première couche de tissu recouvrant une surface extérieure de la première couche de mousse viscoélastique et une deuxième couche de tissu recouvrant une surface extérieure de la deuxième couche de mousse viscoélastique, et dans lequel les première et deuxième couches de tissu sont reliées aux première et deuxième couches de mousse viscoélastique, respectivement.

9. Oreiller lavable de la revendication 8, dans lequel les première et deuxième couches de tissu sont cousues aux première et deuxième couches de mousse viscoélastique, respectivement, le long de bords de chacune des couches.

10. Oreiller lavable de la revendication 9, dans lequel l'enveloppe comporte en outre une première couche de filet recouvrant une surface intérieure de la première couche de mousse viscoélastique et une deuxième couche de filet recouvrant une surface intérieure de la deuxième couche de mousse viscoélastique, et dans lequel les première et deuxième couches de filet sont reliées aux première et deuxième couches de mousse viscoélastique, respectivement.

11. Oreiller lavable de la revendication 10, dans lequel les première et deuxième couches de filet sont cousues aux première et deuxième couches de mousse viscoélastique, respectivement, le long de bords de chacune des couches.

12. Oreiller lavable de la revendication 11, dans lequel la première couche de tissu, la première couche de mousse viscoélastique, et la première couche de filet sont matelassées entre les bords des couches reliées.

13. Oreiller lavable de la revendication 12, dans lequel la deuxième couche de tissu, la deuxième couche de mousse viscoélastique, et la deuxième couche de filet sont matelassées entre les bords des couches reliées.

14. Oreiller lavable de la revendication 1, dans lequel la mousse viscoélastique est granulée.

15. Oreiller lavable comprenant :
une enveloppe comportant un premier panneau et un deuxième panneau relié au premier panneau le long des bords des panneaux respectifs pour former une cavité entre eux ;
un matériau de remplissage positionné à l'intérieur de la cavité, le matériau de remplissage comportant une mousse viscoélastique ayant une hydrophobicité exprimée en termes d'absorption d'eau comprise entre environ 0% (p/p) et environ 5% (p/p) ; et
une couture s'étendant à travers chacun des premier et deuxième panneaux pour définir un motif de matelassage entre les bords des panneaux reliés,
dans lequel chacun des premier et deuxième panneaux comporte une couche de mousse viscoélastique, une couche de filet adjacente à une surface intérieure de la couche de mousse viscoélastique, et une couche de tissu adjacente à une surface extérieure de la couche de mousse viscoélastique.

16. Oreiller lavable de la revendication 15, dans lequel le motif de matelassage se trouve sur une face de chacun des panneaux.

17. Oreiller lavable de la revendication 16, dans lequel le motif de matelassage comporte des formes d'onde ayant une longueur d'onde d'environ 26 centimètres.

18. Oreiller lavable de la revendication 17, dans lequel une distance maximale entre des formes d'onde adjacentes est d'environ 12 centimètres, et dans lequel une distance minimale entre des formes d'onde adjacentes est d'environ 3 cm.

19. Oreiller lavable de la revendication 15, dans lequel les couches de filet des premier et deuxième panneaux, respectivement, font face à la mousse de remplissage viscoélastique étant disposée entre elles.

20. Oreiller lavable de la revendication 15, dans lequel la mousse viscoélastique est granulée.

21. Oreiller lavable de la revendication 15, dans lequel le matériau de remplissage de mousse viscoélastique et les couches de mousse viscoélastique des premier et deuxième panneaux, respectivement, ont une hydrophobicité comprise entre environ 2% (p/p) et environ 4% (p/p).

22. Oreiller lavable de la revendication 15, dans lequel le matériau de remplissage de mousse viscoélastique et les couches de mousse viscoélastique des premier et deuxième panneaux, respectivement, ont une taille d'alvéole moyenne comprise entre environ 0,16 mm et environ 0,19 mm.

23. Oreiller lavable de la revendication 22, dans lequel le matériau de remplissage de mousse viscoélastique et les couches de mousse viscoélastique des premier et deuxième panneaux, respectivement, ont une taille d'alvéole moyenne comprise entre environ 0,17 mm et environ 0,19 mm.

24. Oreiller lavable de la revendication 15, dans lequel le matériau de remplissage de mousse viscoélastique et les couches de mousse viscoélastique des premier et deuxième panneaux, respectivement, ont une perméabilité à l'air comprise entre environ 1,0 litre par seconde et environ 5,0 litres par seconde.

25. Oreiller lavable de la revendication 24, dans lequel le matériau de remplissage de mousse viscoélastique et les couches de mousse viscoélastique des premier et deuxième panneaux, respectivement, ont une perméabilité à l'air comprise entre environ 2,0 litres par seconde et environ 5,0 litres par seconde.
